(19) Europäisches Patentamt
European Patent Office
Office européen des brevets

(11) Veröffentlichungsnummer: **0 239 106 B1**

(12) **EUROPÄISCHE PATENTSCHRIFT**

(45) Veröffentlichungstag der Patentschrift: **12.06.91**

(51) Int. Cl.⁵: **G05D 21/02**, B01D 53/36, G01N 27/416

(21) Anmeldenummer: **87104458.2**

(22) Anmeldetag: **26.03.87**

(54) **Verfahren zum Verringern des NOX-Gehaltes in Gasen, bei welchem dem Gasstrom kontinuierlich NH3 zugesetzt wird.**

(30) Priorität: **27.03.86 DE 3610364**

(43) Veröffentlichungstag der Anmeldung:
**30.09.87 Patentblatt 87/40**

(45) Bekanntmachung des Hinweises auf die
Patenterteilung:
**12.06.91 Patentblatt 91/24**

(84) Benannte Vertragsstaaten:
**AT BE CH DE FR GB IT LI NL SE**

(56) Entgegenhaltungen:
**EP-A- 0 241 751**
**GB-A- 2 020 824**

(73) Patentinhaber: **ROTH-Technik GmbH & Co.**
**Forschung für Automobil- und Umwelttechnik**
**Max-Roth-Strasse**
**W-7560 Gaggenau(DE)**

(72) Erfinder: **Häfele, Edelbert**
**Talwiesenstrasse 13**
**W-7500 Karlsruhe(DE)**
Erfinder: **Kotter, Michael, Dr.**
**Frühmwessweinweg 22**
**W-7520 Bruchsal-Untergrombach(DE)**

(74) Vertreter: **Säger, Manfred, Dipl.-Ing.**
**Säger & Partner Postfach 810 809**
**W-8000 München 80(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum Verringern des $NO_x$-Gehaltes in Gasen, bei welchem dem Gasstrom kontinuierlich $NH_3$ zugesetzt und während des Durchströmens des Gases durch einen katalytischen Konverter das $NO_x$ mit dem $NH_3$ mindestens zum Teil katalytisch reduziert wird.

Die Probleme, die $NO_x$-Emissionen in die Luft, beispielsweise aus Großfeuerungsanlagen, mit sich bringen und eine Reihe von Maßnahmen zur Minderung dieser $NO_x$-Emissionen sind allgemein bekannt. Unter $NO_x$ werden Oxide des Stickstoffes, vornämlich Stickstoffmonoxid und Stickstoffdioxid ($NO$ und $NO_2$), verstanden. Die Forderung, den Stickoxid-Ausstoß von Kraftwerksblöcken auf maximal 200 mg $NO_x$ pro $Nm^3$ zu begrenzen, wird versucht dadurch zu erfüllen, daß die Stickoxide im Abgas durch eine selektive, katalytische Reduktion mit Hilfe eines Ammoniakzusatzes zum Abgas an einem Katalysator bei 300 bis 400° C möglichst weitgehend entfernt werden. Hierbei bereitet jedoch die genaue $NH_3$-Dosierung, insbesondere bei Lastwechsel, Schwierigkeiten. Unter anderem wurde nicht umgesetztes $NH_3$ in der Flugasche und auch im Abwasser festgestellt. Eine Beschränkung des nicht umgesetzten $NH_3$ im Reingas (nach der $NO_x$-Entfernung) auf Werte unter 5 ppm brachte eine Beschränkung des chemischen $NO_x$-Umsatzes auf Werte unter 80 % des ursprünglichen Gehaltes im Abgas mit sich. Eine einfache, sichere, im Hinblick auf den sich verändernden $NO_x$-Gehalt im Abgasstrom flexible, kontinuierliche $NH_3$-Dosierung, welche die Nachteile der bekannten Verfahren vermeidet, ist bisher nicht bekannt geworden.

Aufgabe der vorliegenden Erfindung ist es daher, ein Verfahren nach dem Gattungsbegriff des Patentanspruches 1 bereitzustellen, bei welchem die Dosierung des $NH_3$ zum Gasstrom so angepaßt werden kann an den $NO_x$-Gehalt des Gasstroms, daß der nicht umgesetzte $NH_3$-Gehalt im Reingas auf Werte unter 5 ppm gehalten werden kann und gleichzeitig ein $NO_x$-Abscheidegrad in der Praxis von über 80 % gewährleistet ist. Es ist weiterhin Aufgabe der Erfindung eine Vorrichtung zu schaffen, mit welcher die für die Durchführung des erfindungsgemäßen Verfahrens erforderlichen Meßwerte für $NH_3$ im Reingas rasch, sicher und auf einfache Weise erhalten werden und hierdurch eine genaue, flexible und kontinuierliche $NH_3$-Dosierung in das Abgas vor der katalytischen Reduktion des $NO_x$ ermöglicht wird.

Die Aufgabe wird erfindungsgemäß gelöst durch

a) kontinuerliche Messung des $NH_3$-Gehaltes im Gasstrom an einer Stelle nach der katalytischen Reduktion von $NO_x$ mit Hilfe mindestens einer elektrochemischen Zelle mit mindestens einer Festkörperkette, welche Sauerstoffionen leitendes Material enthält und von der $NH_3$-Konzentration abhängige elektrische Signale erzeugt,

b) selbsttätiges elektronisches Auswerten der Meßsignale in einem Rechner, Berechnung der $NH_3$-Konzentrationswerte aus den Meßsignalen und Vergleichen der berechneten $NH_3$-Konzentrationswerte mit den Werten eines zuvor in den Rechner eingegebenen Schemas und

c) automatisches Steuern des Flusses der $NH_3$-Zugabe zum Gasstrom vor der katalytischen Reduktion durch den Rechner nach Maßgabe der Unterschiede der berechneten Werte von den Werten des Schemas.

Die erfindungsgemäße Vorrichtung zur Durchführung des Verfahrens, welche einen Rechner, Steuerelemente und eine Meßeinheit umfaßt, welche aus einer oder mehreren Gassonden mit Sauerstoffionen leitendem, mit dem Gas in Kontakt stehendem Material mit Elektroden auf der dem Gas zugewandten Fläche und der dem Gas abgewandten Fläche und mit den erforderlichen elektrischen Ableitungen für die erzeugten Signale besteht, ist dadurch gekennzeichnet, daß

a) auf der mit dem Gas in Kontakt stehenden Fläche des Sauerstoffionen leitenden Materials eine Festkörperstruktur angeordnet ist,

b) die Festkörperstruktur aus metallischen und oxidischen oder oxidischen Komponenten besteht und

c) an dem Sauerstoffionen leitenden Material sowohl auf der dem Gas zugewandten als auch auf der dem Gas abgewandten Fläche elektrische Leiter angeordnet sind.

Die Elektrode kann entweder als poröse Festkörperstruktur vorliegen oder als dichte, wegen des erforderlichen Sauerstofftransports hinreichend dünne Schicht, beispielsweise aus wenigen Atomlagen, ausgebildet sein.

Als Rechner und als Steuerelemente werden bekannte Vorrichtungsteile eingesetzt.

Eine Weiterbildung der erfindungsgemäßen Vorrichtung besteht darin, daß im Falle mehrerer Sonden mindestens eine Sonde auf der dem Gas zugewandten Seite über der Festkörperstruktur eine die chemische Umwandlung eines Gasbestandteiles beschleunigende gasdurchlässige Katalysatorschicht, die den Zwischenraum zum Sauerstoffionen leitenden Material und zu der Festkörperstruktur abschließt, aufweist.

Eine alternative Ausführung der erfindungsgemäßen Vorrichtung ist dadurch gekennzeichnet, daß die Sonde ein das Sauerstoffionen leitende Material in mindestens zwei Teile trennendes Element aus Sauerstoffionen nicht leitendem Material aufweist, auf der dem Gas zugewandten Seite über dem einen Teil des Sauerstoffionen leitenden Materials über der Festkörperstruktur mit einer den Gasbestandteilen gegenüber inerten Schicht, über dem bzw. den anderen Teilen über der Festkörperstruktur mit jeweils einer die chemische Umwandlung eines Gasbestandteiles beschleunigenden Katalysatorschicht versehen ist,

die inerte Schicht und die Katalysatorschicht bzw. -Schichten einzeln oder gemeinsam den Zwischenraum zum Sauerstoffionen leitenden Material und zu der Festkörperstruktur verschließend angeordnet sind und

jeder Teil aus Sauerstoff leitendem Material eine separate elektrische Ableitung aufweist.

Die Festkörperstruktur kann aus einem oder mehreren Metallen und aus einem oder mehreren Oxiden mindestens eines Übergangsmetalles aus den Nebengruppen IV, V, VIII und I des Periodensystems der Elemente bestehen.

Die zu untersuchenden $NH_3$-Restkonzentrationen im Gasstrom nach der Reduktion des $NO_x$ können je nach Art der Ausführung der Sonde in einem sehr weiten Konzentrationsbereich gemessen werden, vorteilhafterweise in Konzentrationsbereichen zwischen 0 und bis zu 1000 ppm.

Die Kennlinien der erfindungsgemäßen Vorrichtung sind einstellbar durch entsprechende Wahl der Art der Elektroden und der Betriebstemperatur. Durch die Anwendung von Oxiden und Mischoxiden ergeben sich sehr viele Möglichkeiten für die Zusammensetzung der Elektrode. Die kontinuierliche $NH_3$-Konzentrationsüberwachung kann ungestört von anderen gasförmigen Komponenten im Gasstrom durchgeführt werden. Gemessen wird jeweils die Veränderung der Sauerstoffaktivität, die von der örtlichen Zusammensetzung der mit dem Gasstrom in Kontakt stehenden Grenzfläche der Oxidelektrode abhängig ist.

Es hat sich herausgestellt, daß bei verhältnismäßig hohen Temperaturen, wie z. B. 550 ° C, sehr geringe Zeitkonstanten erreicht werden, z. B. eine Zeitkonstante $\tau$ (50 % Endwert) deutlich unter einer Sekunde. Mit gutem Erfolg brauchbare Oxidelektroden sind beispielsweise $Pt \cdot V_2O_5$, $V_2O_5$, $Pt \cdot CuO$, $TiO_2$ und $Pt \cdot Co_3O_4$. Für den Fall der Verwendung einer Elektrode mit $Pt \cdot V_2O_5$ zur Messung von $NH_3$ bei gleichzeitiger Anwesenheit von CO kann mit Hilfe einer vorgeschalteten Katalysatorschicht, welche als wirksamen Bestandteil $V_2O_5 \cdot TiO_2$ auf einer Unterlage von $Al_2O_3 \cdot MgO \cdot SiO_2$ enthält, $NH_3$ selektiv detektiert werden.

Im folgenden wird die Erfindung anhand einiger Figuren und einiger beispielhafter Versuche zur Messung von gasförmigen Bestandteilen in Gasgemischen beschrieben.

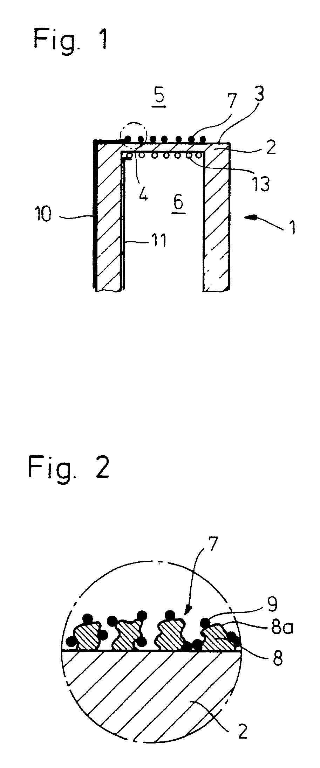

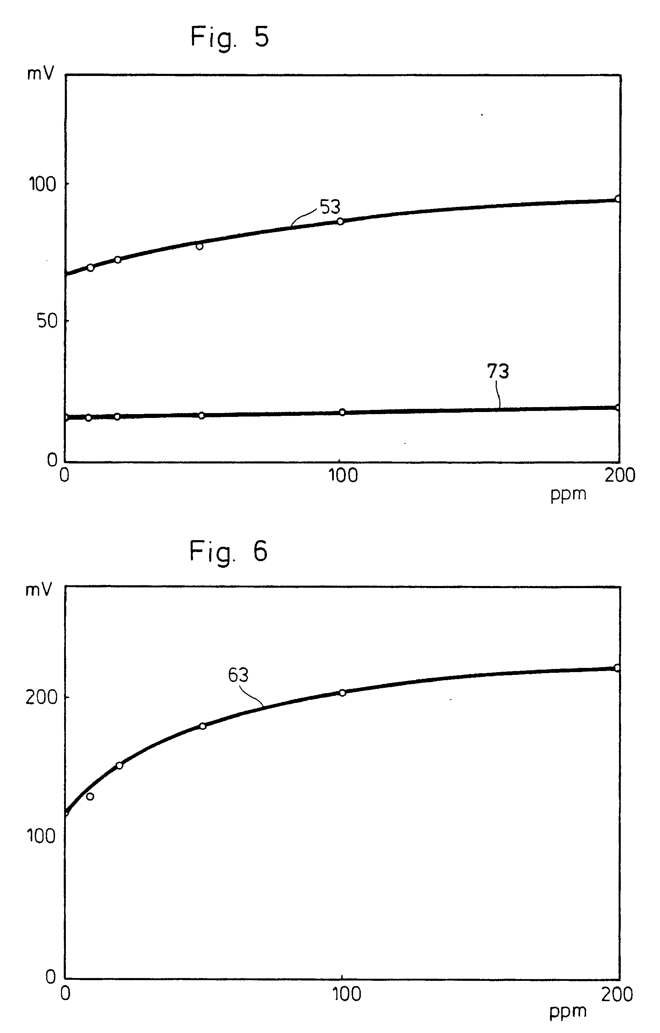

Die Figuren 1 bis 4 zeigen verschiedene Beispiele für den schematischen Aufbau von brauchbaren Versionen der Festkörperketten. Es sind jeweils nur die Sondenköpfe bzw. die mit dem Gasgemisch (Meßgas) in Kontakt stehenden Teile der elektrochemischen Zellen aufgeführt, Rechner und Steuerorgane sind dagegen nicht dargestellt. Die Figuren 5 bis 15 zeigen Ergebnisse und Wirkungsweise der Erfindung bei ihrer Anwendung auf beispielhafte Versuche.

Figur 1 zeigt den Kopf einer einzelnen Meßsonde 1, im wesentlichen bestehend aus einem einseitig geschlossenen Rohr aus einem Festelektrolyten 2, z. B. aus mit Yttriumoxid stabilisiertem Zirkondioxid, aus einer an dessen Innenseite 4 dem Referenzgas 6, beispielsweise Luft, zugewandten Metallelektrode 13, beispielsweise aus Platin, aus einer auf der dem Meßgas zugewandten Fläche 3 des Festelektrolyten 2 (bzw. des Sauerstoffionen leitenden Materials) angeordneten, porösen Festkörperstruktur 7 als Meßelektrode, welche entweder aus einem oder mehreren Oxiden oder aus einer oder mehreren metallischen und einer oder mehreren oxidischen Komponenten bestehen kann, und aus zwei elektrischen Ableitungen 10 und 11 von der dem Meßgas zugewandten Fläche 3 des Festelektrolyten bzw. der dem Referenzgas 6 zugewandten Fläche 4 zum Rechner. Die elektrischen Ableitungen 10 und 11 können beispielsweise aus Leiterbahnen aus Gold bestehen.

Die Figur 2 zeigt einen Ausschnitt aus dem Bereich der dem Meßgas 5 zugewandten Fläche 3 des Festelektrolyten 2 mit einem Teil der darauf angeordneten porösen Festkörperstruktur 7. Der Figur 2 liegt eine Version der Festkörperstruktur 7 zugrunde, welche zwei metallische Komponenten 8 und 8a und eine oxidische Komponente 9 aufweist. Im vorliegenden Beispiel besteht die eine metallische Komponente 8 aus Platin und die zusätzlich aufgebrachte, die Platinoberfläche zumindest teilweise bedeckende Komponente 8a aus Rhodium. Die oxidische Komponente kann beispielsweise aus $V_2O_5$ bestehen. Während die Dicke der Festelektrolytschicht 2 zwischen den beiden Elektroden ca. 1 mm betragen kann, kann die Festkörperstruktur 7 insgesamt eine Dicke von ca. 5 $\mu m$ aufweisen.

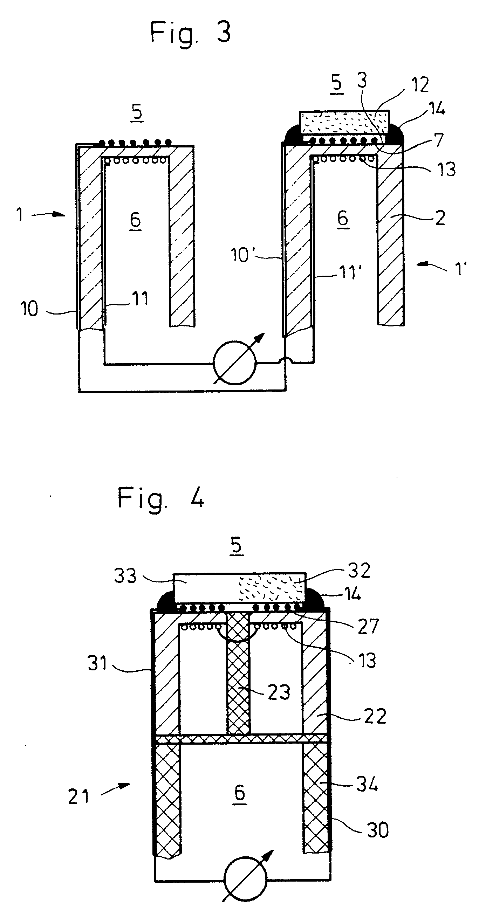

Figur 3 zeigt zwei räumlich voneinander getrennte Sondenköpfe 1 und 1' mit den Ableitungen 10, 10' und 11, 11'. Hierbei ist der eine Sondenkopf 1 wie bereits beschrieben ausgebildet, der andere Sondenkopf 1' weist über der porösen Festkörperstruktur 7 eine gasdurchlässige Katalysatorschicht 12 auf, die den Zwischenraum zum Sauerstoffionen leitenden Material 2 und zu der Festkörperstruktur 7 luftdicht abschließt. Die Katalysatorschicht 12 kann als Tablette ausgebildet sein und mit einem Keramikkleber 14 auf der dem Meßgas 5 zugewandten Fläche 3 des Festelektrolyten befestigt sein. Besteht die Katalysatortablette aus einem die Reaktion

$$NO + NH_3 \rightarrow N_2 + H_2O$$

beschleunigenden Material, so wird bei gleichzeitiger Anwesenheit von NO und $NH_3$ im Meßgas 5 an der Sonde 1 die tatsächliche Konzentration von $NH_3$ im Gas gegenüber der $NH_3$-Konzentration von annähernd 0 an der Sonde 1' gemessen.

Figur 4 zeigt eine andere Version der erfindungsgemäßen Vorrichtung, bei welcher zwei Festkörperketten in einer Sonde vereinigt sind und durch ein Element 23 aus inertem Material getrennt sind. Die beiden Festkörperketten dieser Sonde 21 sind auf einem Rohr 34 aus einer isolierenden Oxidkeramik angeordnet. Über der Festkörperstruktur 27 der beiden Halbzellen ist eine poröse Tablette 32, 33 angeordnet, deren eine Hälfte 32 aus einer Katalysatorschicht, deren andere Hälfte 33 aus Inertmaterial besteht. Über die Ableitungen 30 auf der Seite der Katalysatorschicht und 31 auf der Seite des Inertmaterials kann das elektrische Signal erfaßt werden.

Versuch 1:

Einem Gasgemisch aus Stickstoff plus 3 Vol.-% Sauerstoff wurde $NH_3$ in den nachfolgend genannten Konzentrationen zugemischt:

$NH_3$: 10, 20, 50, 100 und 200 ppm

Alle Gasmischungen wurden mit Sonden, welche $TiO_2$ (Fig. 5, Kurve 53), $V_2O_5$ (Fig. 6, Kurve 63) oder $Co_3O_4$ (Fig. 5, Kurve 73) als Oxid-Elektroden aufwiesen, untersucht. Die Betriebstemperatur betrug 450° C. Die erhaltenen Sondensignale in mV sind in Abhängigkeit der Konzentrationen wiedergegeben.

Versuch 2:

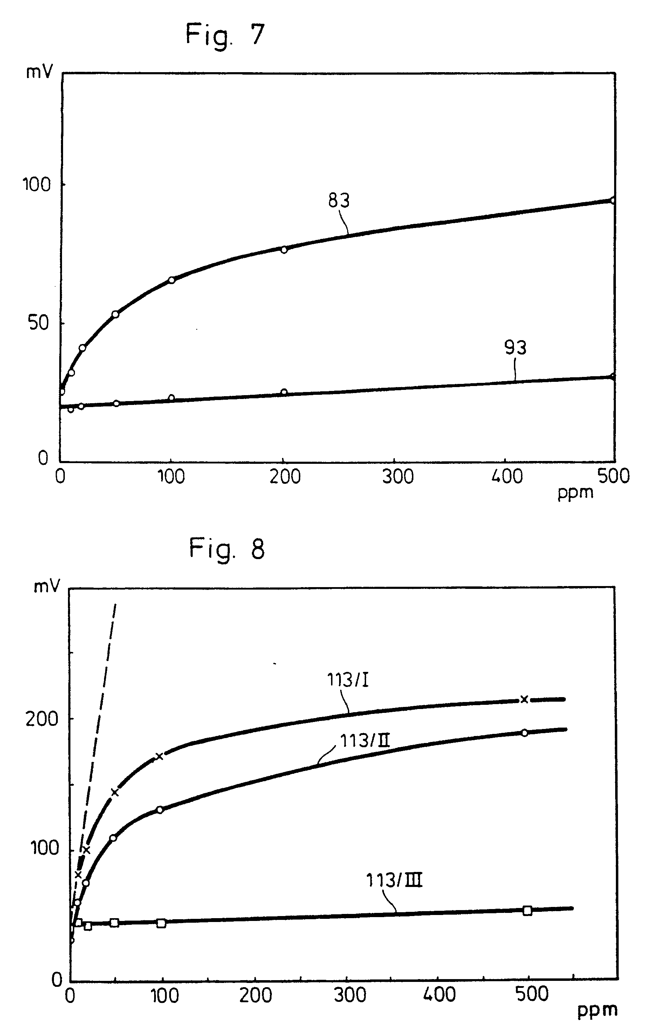

Mit Hilfe von Sonden, welche Oxid-Elektroden aus $Pt \cdot CuO$ (Fig. 7, Kurve 83) bzw. $Pt \cdot Co_3O_4$ (Fig. 7, Kurve 93) enthielten, wurden Gasgemische aus Stickstoff und 3 Vol.-% Sauerstoff und bestimmten Konzentrationen von

$NH_3$: 10, 20, 50, 100, 200 und 500 ppm

bei einer Temperatur von 450° C auf die jeweiligen Sondensignale in mV, in Abhängigkeit von den Konzentrationen untersucht.

Versuch 3:

$NH_3$-Zumischungen in Konzentrationen von 10, 20, 50, 100 und 500 ppm zu einem Trägergas aus Stickstoff mit 3 Vol.-% Sauerstoff wurden bei 550° C zur Messung gebracht unter Verwendung verschiedener poröser Festkörperstrukturen als Elektroden auf der Meßgasseite. Figur 8 zeigt die Ergebnisse. Die Kurve 113/I wurde mit einer Elektrode aus $Pt \cdot V_2O_5$ erhalten, die Kurve 113/II mit einer Elektrode aus $Pt \cdot Rh \cdot V_2O_5$. Zum Vergleich wurden die verschiedenen $NH_3$-Konzentrationen mit einer Elektrode aus reinem Platin (ohne Oxid) als poröser Festkörperstruktur ausgemessen. Die hierzu gehörige Kurve 113/III zeigt praktisch keinen Anstieg in den Sondensignalen und ist somit für eine Überwachung von $NH_3$ in einem Gasgemisch nicht brauchbar. Die gestrichelte Gerade zeigt als Tangente des ersten Kurventeils der Kurve 113/I den Anstieg dieser Kurve im Bereich von 0 bis 10 ppm $NH_3$ und weist die Qualität der $Pt \cdot V_2O_5$-Elektrode mit 4 mV/ppm $NH_3$ nach.

Versuch 4:

Bei gleichen Zumischungen von $NH_3$-Konzentrationen zum gleichen Gasgemisch unter Verwendung der gleichen Elektroden wie in Versuch 4 wurden die Sondensignale lediglich bei einer niedrigeren Temperatur, nämlich bei 450° C, gemessen. Die entsprechenden Kurven

| | |
|---|---|
| 123/I | bei Verwendung von $Pt \cdot V_2O_5$ |
| 123/II | bei Verwendung von $Pt \cdot Rh \cdot V_2O_5$ und |
| 123/III | bei Verwendung von Pt als Elektrode auf der Meßgasseite |

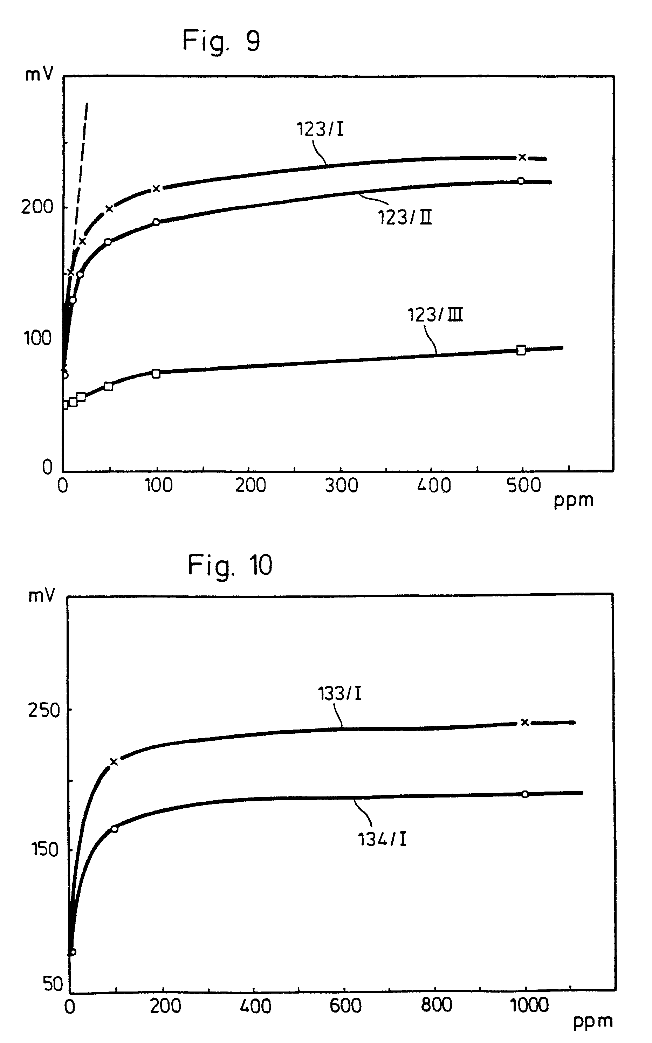

ergeben in Figur 9 ein ähnliches Bild, wie in Figur 8 in Versuch 4, mit der Änderung, daß Kurven mit höheren Signalwerten in mV entstanden sind. Die gestrichelte Linie zeigt den Anstieg der Kurve 123/I im Bereich von 0 bis 10 ppm $NH_3$, der noch einen steileren Verlauf mit 7 mV/ppm $NH_3$ nimmt als der entsprechende Teil der Kurve 113/I in Figur 8.

Versuch 5:

Durch Zumischen von 100 ppm $NH_3$ und 1000 ppm $NH_3$ einerseits und CO andererseits zu einem Gasgemisch aus Stickstoff mit 3 Vol.-% Sauerstoff wurden Meßgase hergestellt, deren Sondensignale in mV unter Verwendung einer Oxidelektrode aus $Pt \cdot V_2O_5$ bei 450° C erfaßt wurden. Ein Vergleich der Ergebnisse, die in Figur 10 dargestellt sind, zeigt, daß zunächst sowohl die $NH_3$-Kurve 133/I als auch die CO-Kurve 134/I jeweils bis 100 ppm einen unterschiedlich steilen Anstieg aufweisen, danach jedoch rasch verflachen. Die Werte für die Sondensignale für $NH_3$-Konzentrationen liegen höher als die für CO-Konzentrationen.

Versuch 6:

Zu einem Gasgemisch aus Stickstoff, 3 Vol.-% Sauerstoff, 200 ppm NO und 200 ppm CO wurden 10, 20, 50 und 100 ppm $NH_3$ zugemischt. Bei

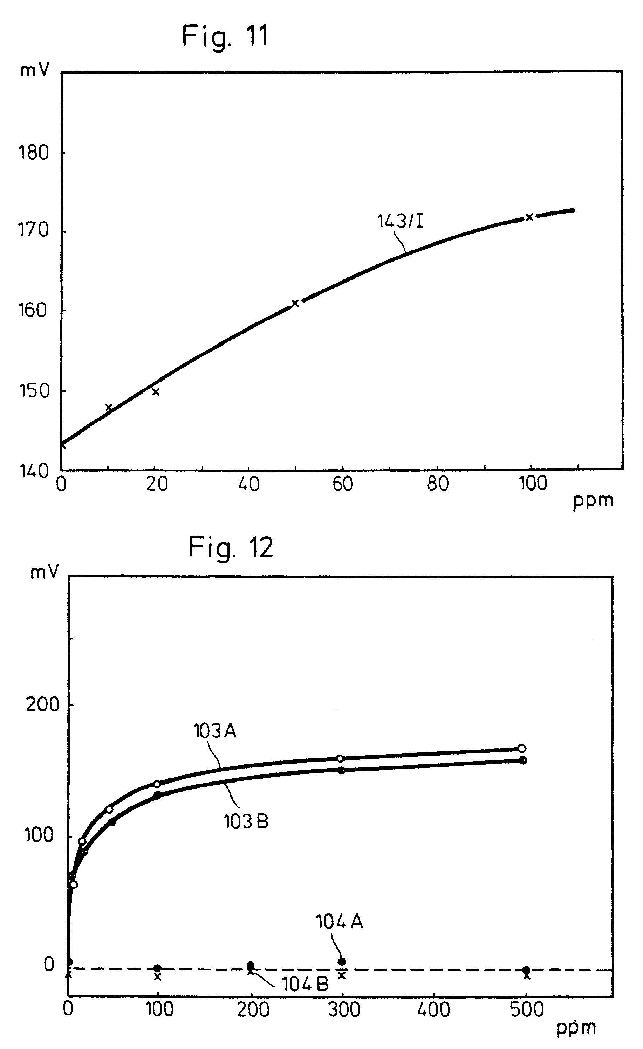

Verwendung einer Oxidelektrode aus Pt•$V_2O_5$ wurden bei 450° C die Sondensignale in mV für den $NH_3$-Bestandteil gemessen. Die Werte für die Sondensignale lagen zwar etwas niedriger als vergleichbare Versuche in einem Gasgemisch aus Stickstoff und ausschließlich 3 Vol.-% Sauerstoff, doch zeigt die zugehörige Kurve 143/I in Figur 11 einen guten verwertbaren Verlauf für eine Überwachung geringer Konzentrationen an $NH_3$ in einem solchen Gasgemisch.

Versuch 7:

In einem Trägergas aus Stickstoff und 3 Vol.-% Sauerstoff wurden Zumischungen aus
1. $NH_3$: in den Konzentrationen 10, 20, 50, 100, 300 und 500 ppm und
2. CO: in den Konzentrationen 100, 200, 300 und 500 ppm

mit einer Vorrichtung aus zwei getrennten Sonden (A) und mit einer Sonde aus zwei Halbzellen (B) jweils bei 450° C zur Messung gebracht. Die ermittelten Sondensignale in mV, in Abhängigkeit von der Konzentration der Zumischungen, sind aus Figur 12 ersichtlich: mit den verwendeten Sonden wurden für CO weder mit der einen Vorrichtungs-Variante (2 getrennte Sonden: Kurve 104 A) noch mit der anderen (Sonde mit zwei Halbzellen: Kurve 104 B) für eine Überwachung Signale erhalten. Demgegenüber lagen die Kurven 103 A für $NH_3$, gemessen mit zwei getrennten Sonden, und die Kurve 103 B, gemessen mit einer Sonde aus zwei Halbzellen,nahe beieinander und zeigten besonders für Konzentrationen im Bereich von 0 bis 50 ppm jeweils einen steilen Anstieg. In allen betrachteten Fällen bestand das Elektrodenmaterial aus Pt•$V_2O_5$, der der zweiten Sonde 1' oder der zweiten Halbzelle der Sonde 21 (s. Fig. 3 und 4) vorgeschaltete Katalysator aus $V_2O_5$•$TiO_2$ auf $Al_2O_3$•MgO•$SiO_2$.

Versuch 8:

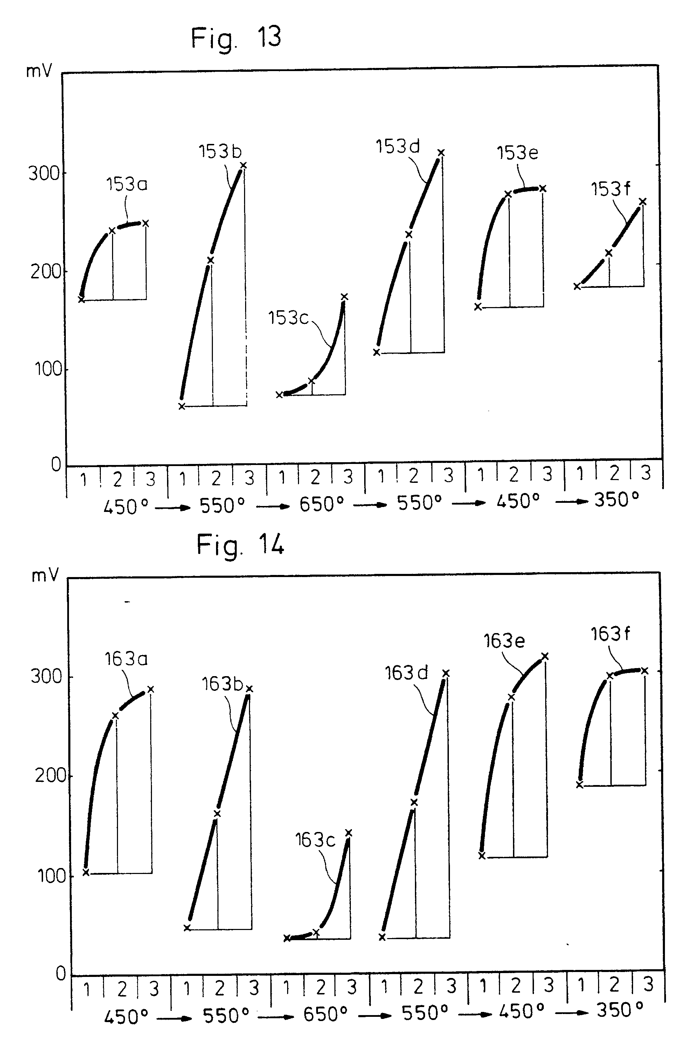

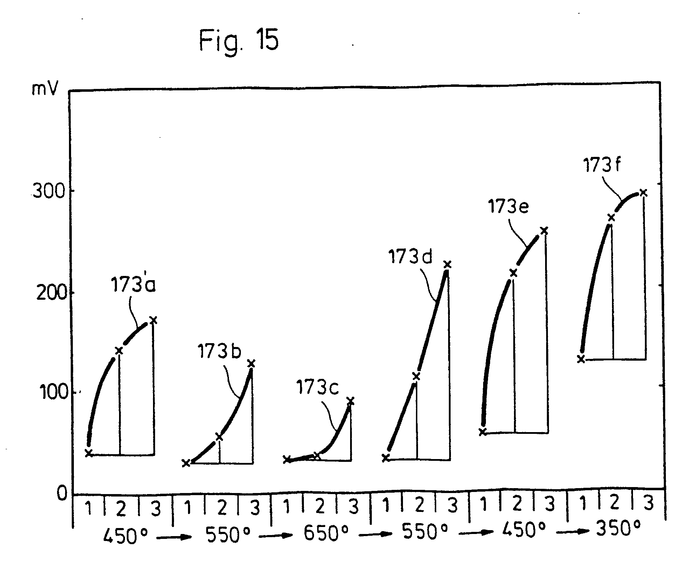

In diesem Versuch wurden $NH_3$-Zusätze von 100 ppm und 1000 ppm zu einem Gasgemisch aus Stickstoff und 3 Vol.-% Sauerstoff zugemischt und die Sondensignale in mV mit Hilfe von drei verschiedenen Oxidelektroden bei Temperaturen zwischen 350° C und 650° C gemessen. Die Oxidelektroden bestanden aus:
a) Pt•$TiO_2$ (siehe Figur 13)
b) Pt•$V_2O_5$ (siehe Figur 14)
c) Pt•$TiO_2$ $V_2O_5$ (siehe Figur 15)

Für alle drei Teilversuche (a), b) und c)) wurden die Sondensignale in mV unter vergleichbaren Bedingungen gemessen, d. h. einerseits für das Gasgemisch ohne $NH_3$-Zusatz (1), für das Gasgemisch plus 100 ppm $NH_3$ (2) und für das Gasgemisch plus 1000 ppm $NH_3$ (3) und andererseits bei Temperaturen, die beginnend mit 450° C schrittweise zunächst um 100° erhöht wurden und danach wieder um dieselbe Differenz abgesenkt wurden bis auf 350° C. Da die Sonden vor Durchlauf des Temperaturzyklus bei einer relativ niedrigen Temperatur von 450° C präpariert wurden, ist zu erwarten, daß wie die Fig. 13 bis 15 zeigen, die Hochtemperaturbehandlung einen Einfluß auf die Sondencharakteristik hat. Vor allem zeigen diese Messungen, daß in Abhängigkeit von der Temperatur $NH_3$ in verschiedenen Konzentrationsbereichen gemessen werden kann.

Versuch 9:

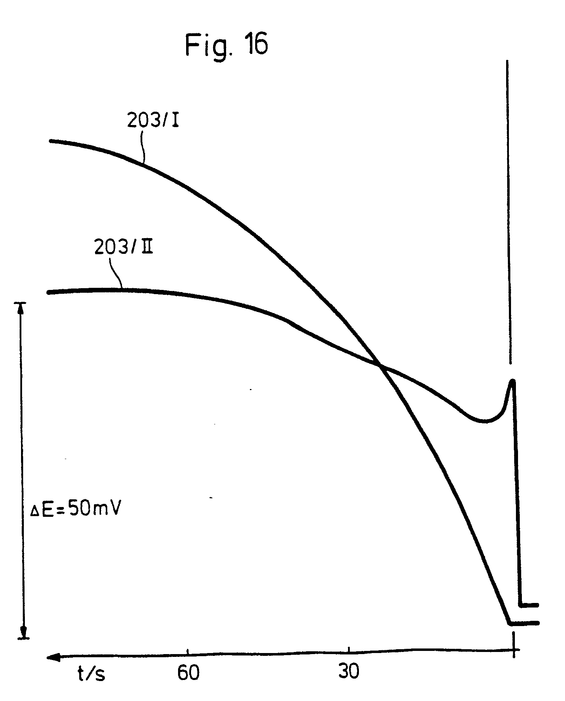

In diesem Versuch wurde bei einer vom Startzeitpunkt an gleichmäßigen Zumischung von 20 ppm $NH_3$ in ein Gasgemisch aus Stickstoff und 3 Vol.-% Sauerstoff bei einer Temperatur von 550° C und zwei verschiedenen Oxidelektroden untersucht. Die Ergebnisse zeigt die Figur 16, zum Erhalt der Kurve 203/I wurde als Oxidelektrode Pt $V_2O_5$ verwendet, für die Kurve 203/II die Elektrode Pt Rh $V_2O_5$. Aus der Kurve 203/II ist erkennbar, daß innerhalb einer Zeitspanne von weniger als 1 Sekunde 50 % des Signal-Endwertes erhalten wurde.

**Ansprüche**

1. Verfahren zum Verringern des $NO_x$-Gehaltes in Gasen, bei welchem dem Gasstrom kontinuierlich $NH_3$ zugesetzt und während des Durchströmens des Gases durch einen katalytischen Konverter das $NO_x$ mit dem $NH_3$ mindestens zum Teil katalytisch reduziert wird, gekennzeichnet durch
   a) kontinuerliche Messung des $NH_3$-Gehaltes im Gasstrom an einer Stelle nach der katalytischen Reduktion von $NO_x$ mit Hilfe mindestens einer elektrochemischen Zelle mit mindestens einer Festkörperkette, welche Sauerstoffionen leitendes Material enthält und von der $NH_3$-Konzentration abhängige elektrische Signale erzeugt,
   b) selbsttätiges elektronisches Auswerten der Meßsignale in einem Rechner, Berechnung der $NH_3$-Konzentrationswerte aus den Meßsignalen und Vergleichen der berechneten $NH_3$-Konzentrationswerte mit den Werten eines zuvor in den Rechner eingegebenen Schemas und
   c) automatisches Steuern des Flusses der $NH_3$-Zugabe zum Gasstrom vor der katalytischen Reduktion durch den Rechner nach Maßgabe der Unterschiede der berechneten Werte von den Werten des Schemas.

2. Vorrichtung zur Durchführung des Verfahrens nach Anspruch 1, welche einen Rechner, Steuerelemente und eine Meßeinheit umfaßt, welche aus einer oder mehreren Gassonden mit Sauerstoffionen leitendem, mit dem Gas in Kontakt stehendem Material mit Elektroden auf der dem Gas zugewandten Fläche und der dem Gas abgewandten Fläche und mit den erforderlichen elektrischen Ableitungen für die erzeugten Signale besteht, dadurch gekennzeichnet, daß

a) auf der mit dem Gas (5) in Kontakt stehenden Fläche (3) des Sauerstoffionen leitenden Materials (2) eine Festkörperstruktur (7) angeordnet ist,

b) die Festkörperstruktur (7) aus metallischen und oxidischen oder oxidischen Komponenten (8, 9) besteht und

c) an dem Sauerstoffionen leitenden Material (2) sowohl auf der dem Gas (5) zugewandten als auch auf der dem Gas abgewandten Fläche (3, 4) elektrische Leiter (10, 11) angeordnet sind.

3. Vorrichtung nach Anspruch 2, dadurch gekennzeichnet, daß im Falle mehrerer Sonden (1, 1', 1″ etc.) mindestens eine Sonde (1') auf der dem Gas (5) zugewandten Seite über der Festkörperstruktur (7) eine die chemische Umwandlung eines Gasbestandteiles beschleunigende gasdurchlässige Katalysatorschicht (12), die den Zwischenraum zum Sauerstoffionen leitenden Material (2) und zu der Festkörperstruktur (7) abschließt, aufweist.

4. Vorrichtung nach Anspruch 2, dadurch gekennzeichnet, daß die Sonde (21) ein das Sauerstoffionen leitende Material (22) in mindestens zwei Teile trennendes Element (23) aus Sauerstoffionen nicht leitendem Material aufweist, auf der dem Gas (5) zugewandten Seite über dem einen Teil des Sauerstoffionen leitenden Materials (22) über der Festkörperstruktur (27) mit einer den Gasbestandteilen gegenüber inerten Schicht (33), über dem bzw. den anderen Teilen über der Festkörperstruktur (27) mit jeweils einer die chemische Umwandlung eines Gasbestandteiles beschleunigenden Katalysatorschicht (32, 32', 32″ etc.) versehen ist, die inerte Schicht und die Katalysatorschicht bzw. - Schichten einzeln oder gemeinsam den Zwischenraum zum Sauerstoffionen leitenden Material und zu der Festkörperstruktur verschließend angeordnet sind und jeder Teil aus Sauerstoff leitendem Material eine separate elektrische Ableitung (30, 30', 30″, etc.,31) aufweist.

5. Vorrichtung nach einem der Ansprüche 2, 3 oder 4, dadurch gekennzeichnet, daß die Festkörperstruktur (7) aus einem oder mehreren Metallen und aus einem oder mehreren Oxiden mindestens eines Übergangsmetalles aus den Nebengruppen IV, V, VIII und I des Periodensystems der Elemente besteht.

## Claims

1. Process for reducing the $NO_x$ content in gases, in which $NH_3$ is continuously added to the gas stream and during the passage of the gas through a catalytic converter the $NO_x$ is at least partially catalytically reduced by the $NH_3$, characterised by

a) continuous measurement of the $NH_3$ content of the gas stream at a point after the catalytic reduction of $NO_x$ with the aid of at least one electro-chemical cell having at least one solid-state circuit which contains material conducting oxygen ions and produces electrical signals dependent on the $NH_3$ concentration.

b) automatic electronic analysis of the measured signals in a computer, determination of the $NH_3$ concentration values from the measured signals and comparison of the resulting $NH_3$ concentration values with the values of a standard previously fed into the computer and

c) automatic control by the computer of the flow of the $NH_3$ added to the gas stream before the catalytic reduction, according to the magnitude of the differences between the values determined and the values in the standard.

2. Apparatus for carrying out the process according to claim 1 including a computer, control elements and a measuring unit which comprises one or more gas probes with material conducting oxygen ions and in contact with the gas with electrodes on the surface which faces towards the gas and on the surface which is away from the gas and with the necessary electric leads for the signals produced, characterised in that

a) a solid-state structure (7) is arranged on that surface (3) of the oxygen-ion-conducting material (2) which is in contact with the gas (5),

b) the solid-state structure (7) comprises metallic and oxidic or oxidic components (8, 9) and

c) electric leads (10, 11) are arranged on the oxygen-ion-conducting material (2), both on the surface (3) which is towards the gas and also on the surface (4) which is away from the gas.

3. Apparatus according to claim 2 characterised in that where there are several probes (1, 1', 1" etc) at least one probe (1') has on the side which is towards the gas (5) over the solid-state structure (7) a gas-permeable catalyst layer (12) which accelerates the chemical conversion of a component of the gas, the layer closing off the intermediate space leading to the material (2) which conducts oxygen ions and to the solid-state structure (7).

4. Apparatus according to claim 2 characterised in that the probe (21) has an element (23) of material which does not conduct oxygen ions and separates the oxygen-ion-conducting material (22) into at least two parts, provided on the side towards the gas (5) over the one part of the oxygen-ion-conducting material (22) over the solid-state structure (27) with a layer (33) inert with respect to the gas components, and over the or each other part over the solid-state structure (27) with a respective catalyst layer (32, 32', 32" etc) accelerating the chemical conversion of a component of the gas,
the inert layer and the catalyst layer or layers individually or in common being arranged to close off the intermediate space leading to the oxygen-ion-conducting material and the solid-state structure and
each part of oxygen-conducting-material has a separate electric lead (30, 30', 30" etc, 31).

5. Apparatus according to one of claims 2, 3 or 4 characterised in that the solid-state structure (7) comprises one or more metals and one more metals and one or more oxides of at least one transition metal of the adjacent groups IV, V, VIII and I of the Periodic Table.

**Revendications**

1. Procédé pour ábaisser la teneur en $NO_x$ dans des gaz, dans leguel on ajoute en continu au courant gazeux du $NH_3$ et, pendant l'écoulement du gaz à travers un convertisseur catalytique, on réduit catalytiquement au moins en partie le $NO_x$ avec le $NH_3$, caractérisé
  a) par la mesure continue de la teneur en $NH_3$ dans le courant gazeux en un emplacement situé après la réduction catalytique du $NO_x$ à l'aide d'au moins une cellule électrochimique comportant au moins une chaine de corps solides qui contient un matériau conduisant les ions oxygène et qui produit des signaux électriques dépendant de la concentration en $NH_3$,
  b) par une évaluation électronique automatique des signaux de mesure dans un calculateur, le calcul des valeurs de concentration en $NH_3$ à partir des signaux de mesure et la comparaison des valeurs de concentration en $NH_3$ calculées avec les valeurs d'un schéma préalablement introduit dans le calculateur, et
  c) une commande automatique de l'écoulement de l'addition de $NH_3$ dans le courant gazeux avant la réduction catalytique par le calculateur en fonction des différences entre les valeurs calculées et les valeurs du schéma.

2. Dispositif pour l'exécution du procédé selon la revendication 1, gui comprend un calculateur, des éléments de commande et une unité de mesure laquelle se compose d'une ou plusieurs sondes à gaz avec un matériau conduisant les ions oxygène en contact avec le gaz avec des électrodes sur la surface tournée vers le gaz et la surface opposée au gaz et avec les dérivations électriques nécessaires pour les signaux produits, caractérisé en ce que
  a) une structure de corps solides (7) est disposée sur la surface (3) en contact avec le gaz (5) du matériau conduisant les ions oxygène,
  b) la structure de corps solides (7) se compose de constituants (8, 9) métalliques et oxydiques ou oxydiques et
  c) des conducteurs électriques (10, 11) sont disposés sur le matériau (2) conduisant les ions oxygène tant sur la surface tournée vers le gaz (5) que sur la surface opposée au gaz (3,4).

3. Dispositif selon la revendication 2, caractérisé en ce que dans le cas de plusieurs sondes (1, 1', 1", etc.) au moins une sonde (1') sur le côté tourné vers le gaz (5) présente sur la structure de corps solides (7) une couche de catalyseur (12) perméable au gaz accélérant la transformation chimique d'un constituant du gaz, qui ferme l'espace intermédiaire vers le matériau (2) conduisant des ions oxygène et vers la structure de corps solides (7).

4. Dispositif selon la revendication 2, caractérisé en ce que la sonde (21) présente un élément (23) en matériau ne conduisant pas les ions oxygène séparant en au moins deux parties le matériau (22) conduisant les ions oxygène, est munie du côté tourné vers le gaz (5), sur la première partie du matériau (22) conduisant les ions oxygène, sur la structure de corps solides (27) d'une couche (33) inerte vis-à-vis des constituants du gaz, sur la ou les autres parties sur la structure de corps solides (27), d'une couche de catalyseur (32, 32 ', 32", etc.) accélérant la transformation chimique d'un constituant du gaz,

la couche inerte et la couche ou les couches de catalyseur sont disposées de manière à fermer isolément ou en commun l'espace intermédiaire vers le matériau conduisant les icns oxygène et vers la structure de corps solides et chacune des parties du matériau conduisant l'oxygène présente une dérivation électrique séparée (30, 30', 30", etc. , 31).

5. Dispositif selon les revendications 2, 3 ou 4, caractérise en ce que la structure de corps solides (7) est composée d'un ou plusieurs métaux et d'un ou plusieurs oxydes d'au moins un métal de transition des sous-groupes IV, V, VIII et I de la classification périodique des éléments.

Fig. 1

Fig. 2

Fig. 3

Fig. 4

## Fig. 5

## Fig. 6

Fig. 7

Fig. 8

### Fig. 9

### Fig. 10

## Fig. 11

## Fig. 12

14

## Fig. 13

## Fig. 14

Fig. 15

## Fig. 16

203/I

203/II

ΔE=50mV

t/s          60          30